# FASCICULE DE BREVET EUROPEEN

(11) **EP 4 192 725 B1**
(45) Date de publication et mention de la délivrance du brevet: **04.09.2024**
(21) Numéro de dépôt: 21746182.1
(22) Date de dépôt: 23.07.2021
(51) Int. Cl.: B62M 6/55

(54) **DISPOSITIF DE TRANSMISSION POUR VÉHICULE À PROPULSION HUMAINE**
GETRIEBEVORRICHTUNG FÜR EIN DURCH MENSCHENKRAFT ANGETRIEBENES FAHRZEUG
TRANSMISSION DEVICE FOR A HUMAN-POWERED VEHICLE

(30) Priorité: 06.08.2020 FR 2008322
(43) Date de publication de la demande: 14.06.2023
(73) Titulaire: Etoile des Alpes, 74300 Cluses (FR)
(72) Inventeur: ALLAMAND, Emile, 74300 Cluses (FR)
(74) Mandataire: Cabinet Poncet
(86) Numéro de dépôt international: PCT/IB2021/056670
(87) Numéro de publication internationale: WO 2022/029539

(56) Documents cités:
- DE-A1- 102016 225 165
- JP-A- 2002 362 466
- US-A1- 2017 217 538
- US-A1- 2019 193 812

## Description

### DOMAINE TECHNIQUE DE L'INVENTION

La présente invention concerne le domaine des véhicules légers, dont la propulsion et au moins en partie réalisée par la force humaine, et qui comportent des moyens d'assistance à la propulsion pour réduire les efforts déployés par l'utilisateur. Ainsi, la présente invention concerne notamment le domaine des cycles à assistance électrique.

La présente invention concerne plus spécifiquement, dans ce domaine des véhicules légers, les dispositifs de transmission à changement de rapport de transmission, permettant à l'utilisateur de pouvoir choisir différents rapports de transmission pour adapter son effort et sa cadence de mouvement à la topologie du terrain parcouru par le véhicule.

Dans le domaine des cycles à assistance électrique, il existe actuellement deux configurations prédominantes.

Selon la première configuration, illustrée par exemple par le document DE 10 2016225165 A1, un moteur d'assistance électrique est couplé en aval du dispositif de transmission à changement de rapport de transmission, en entraînement direct sur la roue du véhicule. Dans ce cas, la vitesse du moteur d'assistance électrique est directement proportionnelle à la vitesse du véhicule. Il en résulte que le moteur d'assistance électrique ne travaille pas toujours sur son point de fonctionnement optimal : à faible vitesse du véhicule, le couple et la puissance développés par le moteur d'assistance électrique sont faibles, et son rendement est réduit, réduisant l'autonomie du véhicule.

Selon la seconde configuration, illustrée par exemple par le document US 2017/217538, un moteur d'assistance électrique est couplé en amont du dispositif de transmission à changement de rapport de transmission, par exemple au niveau du pédalier d'un cycle. Dans ce cas, le moteur d'assistance électrique bénéficie du système de transmission et peut avoir une vitesse de rotation relativement proche de sa vitesse de rotation optimale quelle que soit la vitesse du véhicule, favorisant la génération d'un couple et d'une puissance plus élevés, avec un rendement meilleur. Cependant, dans le cas des véhicules légers, le dispositif de transmission est dépourvu d'embrayage, de sorte que cette configuration nécessite que l'assistance doit être coupée temporairement pendant chaque changement de rapport de transmission, pour éviter la dégradation rapide des pignons, chaînes et roues dentées du dispositif de transmission. Il en résulte que l'utilisateur perçoit une perte d'assistance à chaque changement de rapport de transmission, ce qui est à la fois une perte d'efficacité et un désagrément.

Selon une troisième configuration, décrite en relation avec la figure 10 du document DE 10 2011120675 A1, un premier sous-ensemble de transmission à train d'engrenage simple à trois rapports de transmission reçoit le couple d'un arbre d'entrée à pédalier et le transmet à un arbre de renvoi déporté à l'écart de l'arbre d'entrée et portant une roue entraînée recevant le couple d'un moteur d'assistance électrique, lequel arbre de renvoi transmet le couple résultant à un arbre de sortie par l'intermédiaire d'un second sous-ensemble de transmission à train d'engrenage simple à deux rapports de transmission. Cette configuration est encombrante, du fait des structures de trains d'engrenage simples et de la position déportée de l'arbre de renvoi. Elle induit en outre des couples parasites, et nécessite des usinages complexes.

Le document US 2017/217538 A1 suggère également la troisième configuration dans laquelle un couple d'assistance est transmis, par l'intermédiaire d'une boîte de vitesse, à un élément intermédiaire situé entre un premier sous-ensemble de transmission recevant le couple d'un arbre d'entrée et un second sous-ensemble de transmission transmettant le mouvement à un arbre de sortie. La structure décrite est particulièrement complexe, avec plusieurs boîtiers. La structure et la position de l'élément intermédiaire ne sont pas décrites. Le document US 2019/193812 A1, décrit un dispositif de transmission pour véhicule à propulsion humaine selon le préambule de la revendication 1.

### EXPOSE DE L'INVENTION

Un problème proposé par la présente invention est de concevoir un dispositif de transmission qui évite les inconvénients des configurations connues d'assistance à la propulsion humaine des véhicules légers, en étant particulièrement compact et peu volumineux, de façon à être compatible avec les encombrements admissibles sur un véhicule tel qu'un cycle.

Un autre problème proposé par la présente invention est de concevoir un tel dispositif de transmission permettant de conserver un rendement du moteur d'assistance électrique proche de son rendement optimal, tout en réduisant sensiblement les pertes d'efficacité et les désagréments résultant des changements nécessaires de rapport de transmission lors de l'utilisation du véhicule.

Pour atteindre ces objets ainsi que d'autres, l'invention propose un dispositif de transmission pour véhicule à propulsion humaine, comprenant :
- un arbre d'entrée rotatif, apte à recevoir un couple d'entraînement appliqué par un utilisateur,
- un premier sous-ensemble de transmission à plusieurs rapports de transmission, ayant une première entrée couplée à l'arbre d'entrée rotatif, et ayant une première sortie,
- un second sous-ensemble de transmission à plusieurs rapports de transmission, ayant une seconde entrée, et ayant un arbre de sortie coaxial avec l'arbre d'entrée,
- un élément de transmission intermédiaire, couplant fonctionnellement en rotation la première sortie et la seconde entrée,
- des moyens de couplage aptes à transmettre à l'élément de transmission intermédiaire un couple d'assistance généré sur l'arbre d'un moteur d'assistance, dans lequel :
   - le premier sous-ensemble de transmission et le second sous-ensemble de transmission comprennent chacun un train épicycloïdal,
   - l'élément de transmission intermédiaire est une pièce, constituant à la fois la première sortie et la seconde entrée, et montée rotative et coaxiale avec l'arbre d'entrée et l'arbre de sortie,
   - l'élément de transmission intermédiaire comprend un premier dispositif de crabotage apte à coupler sélectivement la première sortie à la première entrée du premier sous-ensemble de transmission,
   - l'élément de transmission intermédiaire comprend un second dispositif de crabotage apte à coupler sélectivement l'arbre de sortie à la seconde entrée du second sous-ensemble de transmission.

Dans la description et les revendications, on entend par « dispositif de crabotage » un dispositif apte à rendre sélectivement solidaires deux pièces en rotation. Dans un mode de réalisation, il peut s'agir d'un dispositif de crabotage agissant dans les deux sens de rotation et nécessitant un actionnement positif pour modifier son état entre un état accouplé et un état désaccouplé. Dans un autre mode de réalisation, il peut s'agir d'un dispositif de crabotage agissant dans un seul sens de rotation, produisant un état désaccouplé dans un premier sens de rotation, produisant automatiquement un état accouplé dans l'autre sens de rotation, et formant alors un dispositif de roue libre.

Une telle structure à sous-ensembles de transmission comportant un train épicycloïdal, avec un élément de transmission intermédiaire coaxial avec l'arbre d'entrée, permet, pour un nombre donné de rapports différents de transmission, de réduire sensiblement le nombre de pièces constitutives et l'encombrement du dispositif de transmission. En outre, on réduit sensiblement les couples parasites apparaissant lors de la transmission d'efforts importants.

On comprend que le rapport global de transmission d'un tel dispositif est constitué de la multiplication d'un premier rapport de transmission, généré par le premier sous-ensemble de transmission, et d'un second rapport de transmission, généré par le second sous-ensemble de transmission. Pour réaliser toute la gamme des rapports de transmission nécessaires lors de l'utilisation du véhicule, l'utilisateur doit naturellement utiliser les changements de rapport de transmission de l'un et l'autre des sous-ensembles de transmission.

Chaque fois que l'utilisateur change le rapport de transmission du premier sous-ensemble de transmission, qui se trouve en amont de l'élément de transmission intermédiaire, il n'est pas nécessaire que l'assistance à la propulsion produite par le moteur d'assistance soit réduite ou interrompue. Il en résulte une réduction sensible des pertes d'efficacité et des désagréments subis par l'utilisateur lors de l'utilisation du véhicule.

Par contre, chaque fois que l'utilisateur change le rapport de transmission du second sous-ensemble de transmission, qui se trouve en aval de l'élément de transmission intermédiaire, il reste nécessaire que l'assistance à la propulsion produite par le moteur d'assistance soit momentanément adaptée. Cependant, grâce aux sous-ensembles de transmission, la vitesse de rotation du moteur d'assistance peut être maintenue plus proche de sa vitesse optimale quelle que soit la vitesse du véhicule, garantissant un gain de rendement et d'autonomie.

Pour gagner encore en compacité et en simplicité, on peut prévoir que l'élément de transmission intermédiaire incorpore un des éléments du second sous-ensemble de transmission.

Selon une disposition particulièrement avantageuse pour faciliter la réalisation de moyens de commande des rapports de transmission, on peut avantageusement prévoir que l'élément de transmission intermédiaire est disposé en liaison pivot sur un support tubulaire fixe entourant l'arbre d'entrée. En effet, dans ce cas, un arbre à cames tubulaires peut être disposé autour du support tubulaire fixe, pour actionner des moyens de blocage sélectif des pignons des sous-ensembles de transmission à train épicycloïdal.

Selon une réalisation avantageuse, on peut prévoir que :
- le premier sous-ensemble de transmission et le second sous-ensemble de transmission comprennent chacun un train épicycloïdal multiplicateur,
- le premier dispositif de crabotage comprend un dispositif de roue libre couplant sélectivement la première sortie à la première entrée du premier sous-ensemble de transmission,
- le second dispositif de crabotage comprend un dispositif de roue libre couplant sélectivement l'arbre de sortie à la seconde entrée du second sous-ensemble de transmission.

On réalise ainsi de façon particulièrement économique les dispositifs de crabotage, par des éléments de type roue libre qui sont aisément disponibles dans le commerce. En outre, on simplifie les moyens de commande des changements de rapports de transmission, car les dispositifs de roue libre ne nécessitent aucune sollicitation positive autre que la vitesse relative de rotation des éléments en amont et en aval du dispositif de roue libre. Du fait de l'effet multiplicateur du train épicycloïdal, pour les rapports autres que la transmission directe du mouvement, le dispositif de roue libre se trouve automatiquement débrayé sans qu'il soit besoin de le solliciter par une action mécanique de commande positive.

Selon la présente invention, on prévoit avantageusement un circuit électronique de commande pilotant un moteur de commande de transmission, lequel moteur de commande de transmission entraîne en rotation un unique arbre à cames de commande de transmission agencé pour modifier sélectivement les rapports de transmission de l'un et l'autre du premier sous-ensemble de transmission et du second sous-ensemble de transmission.

Une telle disposition est particulièrement simple et économique.

Pour réaliser une répartition régulière d'un nombre maximum de rapports de transmission, on peut prévoir de structurer les sous-ensembles de transmission de façon que les rapports de transmission du second sous-ensemble de transmission permettent le passage des rapports de transmission du premier sous-ensemble de transmission de façon séquentielle.

Par exemple, dans le cas d'un second sous-ensemble de transmission ayant seulement 2 rapports de transmission, on peut avantageusement prévoir que :
- les rapports de transmission successifs du premier sous-ensemble de transmission sont répartis en une suite monotone de rapports, de préférence une suite de rapports à progression régulière,
- les premier et second rapports de transmission du second sous-ensemble de transmission sont choisis de façon que la suite des rapports combinés de transmission réalisés par la combinaison des rapports de transmission du premier sous-ensemble de transmission et du premier rapport de transmission du second sous-ensemble de transmission se poursuive de façon monotone, de préférence de façon régulière.

En pratique, quel que soit le nombre de rapports de chaque sous-ensemble de transmission, on peut prévoir que :
- le premier sous-ensemble de transmission est multiplicateur,
- le produit du plus petit ratio de transmission du premier sous-ensemble de transmission avec un des ratios de transmission du second sous-ensemble de transmission est supérieur au produit du plus grand ratio de transmission du premier sous-ensemble de transmission avec le ratio du rapport de transmission précédent du second sous-ensemble de transmission.

Dans la plupart des applications de la présente invention, le dispositif de transmission comprend un moteur d'assistance électrique apte à produire ledit couple d'assistance reçu par l'élément de transmission intermédiaire.

Dans ce cas, il est avantageux de prévoir que le circuit électronique de commande pilote l'alimentation du moteur d'assistance électrique et l'alimentation du moteur de commande de transmission, le circuit électronique de commande comprenant des moyens de synchronisation structurés de telle façon que :
- ils réduisent temporairement le couple d'assistance produit par le moteur d'assistance électrique au cours de chaque étape d'alimentation du moteur de commande de transmission produisant une augmentation du rapport de transmission du second sous-ensemble de transmission, et/ou
- ils augmentent temporairement le couple d'assistance produit par le moteur d'assistance électrique au cours de chaque étape d'alimentation du moteur de commande de transmission produisant une diminution du rapport de transmission du second sous-ensemble de transmission, et
- ils maintiennent sans changement ou augmentent brièvement le couple d'assistance produit par le moteur d'assistance électrique au cours de chaque étape d'alimentation du moteur de commande de transmission produisant un changement de rapport de transmission du seul premier sous-ensemble de transmission.

Dans le cas particulier d'une telle commande de transmission motorisée, il y a encore un intérêt à réduire l'encombrement axial du dispositif de transmission. Il est alors avantageux de prévoir que :
- l'arbre de sortie est creux et disposé à pivotement autour d'un support fixe au moyen de deux roulements de sortie espacés axialement,
- le moteur de commande de transmission est rapporté et fixé dans une partie du support fixe entourée par les roulements de sortie.

Un dispositif de transmission tel que défini ci-dessus peut avantageusement être logé dans un boîtier unique, facilitant son montage sur un véhicule. Les moyens réduisant l'encombrement axial du dispositif permettent de réduire le volume du boîtier, pour le rendre compatible avec l'encombrement admissible sur le véhicule, notamment sur un cycle.

Selon un autre aspect, la présente invention prévoit un cycle muni d'un dispositif de transmission tel que défini ci-dessus.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en coupe longitudinale de l'ensemble du dispositif de transmission selon un mode de réalisation de la présente invention ;
[Fig.2] La figure 2 est une demie coupe longitudinale plus synthétique du dispositif de transmission de la figure 1, illustrant de façon simplifiée les organes principaux du dispositif de transmission ;
[Fig.3] La figure 3 est une demie coupe longitudinale similaire de la figure 2, illustrant une étape de première vitesse dans laquelle les deux dispositifs de crabotage sont engagés ;
[Fig.4] La figure 4 est une demie coupe longitudinale similaire de la figure 2, illustrant une étape de deuxième vitesse dans laquelle le dispositif de crabotage du second sous-ensemble de transmission est engagé et le premier pignon du premier sous-ensemble de transmission est fixe en rotation ;
[Fig.5] La figure 5 est une demie coupe longitudinale similaire de la figure 2, illustrant une étape de troisième vitesse dans laquelle le dispositif de crabotage du second sous-ensemble de transmission est engagé et le second pignon du premier sous-ensemble de transmission est fixe en rotation ;
[Fig.6] La figure 6 est une demie coupe longitudinale similaire de la figure 2, illustrant une étape de quatrième vitesse dans laquelle le dispositif de crabotage du second sous-ensemble de transmission est engagé et le troisième pignon du premier sous-ensemble de transmission est fixe en rotation ;
[Fig.7] La figure 7 est une demie coupe longitudinale similaire de la figure 2, illustrant une étape de cinquième vitesse dans laquelle le dispositif de crabotage du premier sous-ensemble de transmission est engagé et le pignon du second sous-ensemble de transmission est fixe en rotation ;
[Fig.8] La figure 8 est une demie coupe longitudinale similaire de la figure 2, illustrant une étape de sixième vitesse dans laquelle les deux dispositifs de crabotage sont dégagés, et dans laquelle le premier pignon du premier sous-ensemble de transmission et le pignon du second sous-ensemble de transmission sont fixes en rotation ;
[Fig.9] La figure 9 est une demie coupe longitudinale similaire de la figure 2, illustrant une étape de septième vitesse dans laquelle les deux dispositifs de crabotage sont dégagés, et dans laquelle le deuxième pignon du premier sous-ensemble de transmission et le pignon du second sous-ensemble de transmission sont fixes en rotation ;
[Fig.10] La figure 10 est une demie coupe longitudinale similaire de la figure 2, illustrant une étape de huitième vitesse dans laquelle les deux dispositifs de crabotage sont dégagés, et dans laquelle le troisième pignon du premier sous-ensemble de transmission et le pignon du second sous-ensemble de transmission sont fixes en rotation ;
[Fig.11] La figure 11 est une vue de côté illustrant un arbre de commande du dispositif de transmission de la figure 1, dans un mode de réalisation où les sous-ensembles de transmission sont réducteurs, et où les dispositifs de crabotage doivent être actionnés positivement et ne peuvent pas être remplacés par un dispositif de roue libre ;
[Fig.12] La figure 12 est une vue de face illustrant un premier dispositif de crabotage à actionnement positif dans l'élément de transmission intermédiaire ;
[Fig.13] La figure 13 est une vue de face illustrant un second dispositif de crabotage à actionnement positif dans l'élément de transmission intermédiaire ;
[Fig.14] La figure 14 est un diagramme illustrant schématiquement la vitesse du moteur d'assistance en fonction de la vitesse du véhicule et des changements de rapports de transmission, respectivement au cours d'une utilisation d'une configuration à moteur d'assistance électrique couplé en entraînement direct sur la roue du véhicule, au cours d'une utilisation d'une configuration à moteur d'assistance électrique couplé directement sur l'arbre du pédalier du véhicule, et au cours d'une utilisation normale du dispositif selon l'invention ; et
[Fig.15] La figure 15 est un diagramme illustrant la variation du rendement du moteur en fonction de la vitesse du véhicule, respectivement dans les trois configurations de la figure 14 ;
[Fig.16] La figure 16 est une vue de face illustrant un dispositif de crabotage réalisé sous forme d'un dispositif de roue libre ;
[Fig.17] La figure 17 est une vue de côté illustrant un arbre de commande du dispositif de transmission selon l'invention, dans un mode de réalisation où les sous-ensembles de transmission sont multiplicateurs, et où les dispositifs de crabotage peuvent comprendre un dispositif de roue libre ; et
[Fig.18] La figure 18 est un graphique illustrant simultanément, en abscisse la vitesse du véhicule, en ordonnée les vitesses de rotation du moteur d'assistance électrique et du pédalier, et les changements de rapports de transmission permettant de conserver la vitesse de rotation du pédalier dans une plage de vitesses appropriée.

### DESCRIPTION DES MODES DE REALISATION PREFERES

Lorsque des références numériques identiques sont utilisées dans plusieurs modes de réalisation de l'invention ou sur plusieurs figures, ces références numériques désignent des éléments identiques ou similaires dans chacun des modes de réalisation ou sur chacune des figures.

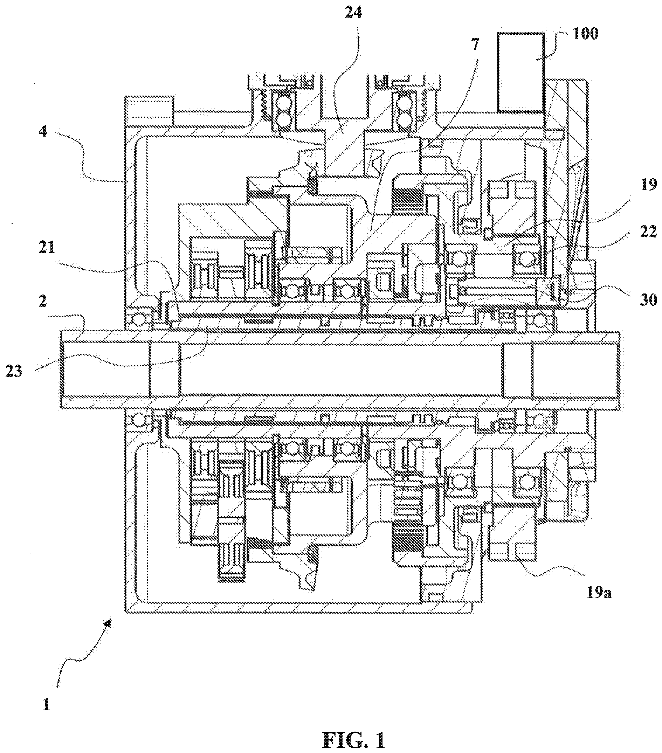

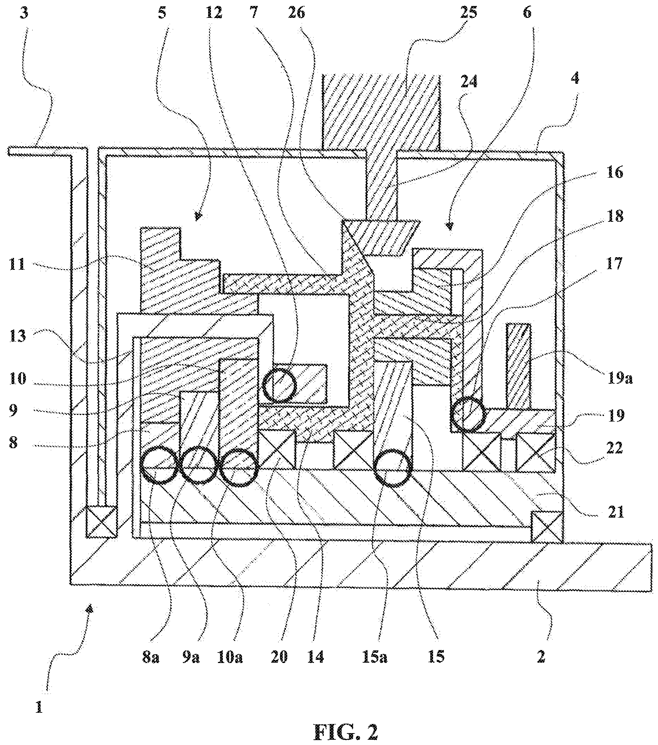

On considère simultanément les figures 1 et 2, sur lesquelles on distingue les organes essentiels d'un dispositif de transmission 1 selon un mode de réalisation de l'invention dans lequel les dispositifs de crabotage sont bidirectionnels et doivent être actionnés positivement pour changer d'état.

Dans ce mode de réalisation, le dispositif de transmission 1 est agencé autour d'un arbre d'entrée 2 rotatif, apte à recevoir un couple d'entraînement appliqué par un utilisateur. En l'espèce, il s'agit de l'arbre d'un pédalier : sur la figure 2, on distingue une des pédales 3. Les organes essentiels du dispositif de transmission 1 sont logés dans un carter 4 fixe.

On distingue de façon générale un premier sous-ensemble de transmission 5, un second sous-ensemble de transmission 6, et un élément de transmission intermédiaire 7.

Le premier sous-ensemble de transmission 5 est un train épicycloïdal, dans lequel on distingue schématiquement une première entrée 13 tubulaire couplée à l'arbre d'entrée 2 rotatif, une première sortie 14 tubulaire, un premier pignon 8, un deuxième pignon 9, un troisième pignon 10, et un satellite 11. Les pignons 8, 9 et 10 ont des nombres de dents différents, et engrènent sélectivement avec des roues dentées de diamètres différents du satellite 11 pour réaliser 3 rapports de transmission distincts. Un quatrième rapport de transmission directe du premier sous-ensemble de transmission 5 est réalisé par un premier dispositif de crabotage 12 apte à coupler sélectivement la première sortie 14 à la première entrée 13. Le premier sous-ensemble de transmission 5 réalise ainsi une transmission à 4 rapports de transmission entre la première entrée 13 couplée à l'arbre d'entrée 2 et la première sortie 14.

Le second sous-ensemble de transmission 6 est également un train épicycloïdal, dans lequel on distingue une seconde entrée 18 tubulaire, un arbre de sortie 19 tubulaire, un quatrième pignon 15 et un second satellite 16 réalisant un premier rapport de transmission du second sous-ensemble de transmission 6. Un second rapport de transmission directe du second sous-ensemble de transmission 6 est réalisé par un second dispositif de crabotage 17 apte à coupler sélectivement l'arbre de sortie 19 à la seconde entrée 18. Le second sous-ensemble de transmission 6 réalise ainsi une transmission à 2 rapports de transmission entre la seconde entrée 18 et l'arbre de sortie 19.

L'élément de transmission intermédiaire 7 couple fonctionnellement en rotation la première sortie 14 et la seconde entrée 18. En pratique, cet élément de transmission intermédiaire 7 peut être une pièce monobloc constituant à la fois un arbre cylindrique tubulaire de première sortie 14 et un arbre cylindrique tubulaire de seconde entrée 18, l'élément de transmission intermédiaire 7 étant monté rotatif par des roulements d'entrée 20 autour d'un support tubulaire 21 fixe qui lui-même entoure l'arbre d'entrée 2.

L'arbre de sortie 19 est lui-même monté rotatif par des roulements de sortie 22 autour du support tubulaire 21, et porte une poulie 19a de chaîne ou de courroie ou un pignon d'engrenage, pour transmettre le couple d'entraînement à au moins une roue d'un véhicule à propulsion humaine tel qu'un cycle.

On distingue en outre des moyens de couplage 26 aptes à transmettre à l'élément de transmission intermédiaire 7 un couple d'assistance généré sur l'arbre 24 d'un moteur d'assistance 25. Dans le mode de réalisation illustré sur les figures, les moyens de couplage 26 sont sous forme d'un engrenage conique transformant un couple de rotation de l'arbre 24 du moteur d'assistance 25 autour d'un axe radial en un couple de rotation axial appliqué sur l'élément de transmission intermédiaire 7. Ainsi, l'élément de transmission intermédiaire 7 reçoit un couple d'assistance, qui s'ajoute au couple généré par l'utilisateur sur la pédale 3.

Les rapports transmission du premier sous-ensemble de transmission 5 sont sélectionnés par blocage d'un pignon correspondant 8, 9 ou 10 au moyen de cliquets respectifs 8a, 9a ou 10a, ou par engagement du premier dispositif de crabotage 12 solidarisant en rotation la première entrée 13 et la première sortie 14.

Les rapports de transmission du second sous-ensemble de transmission 6 sont sélectionnés par blocage du quatrième pignon 15 au moyen d'un cliquet respectif 15a, ou par engagement du second dispositif de crabotage 17 solidarisant en rotation la seconde entrée 18 et l'arbre de sortie 19.

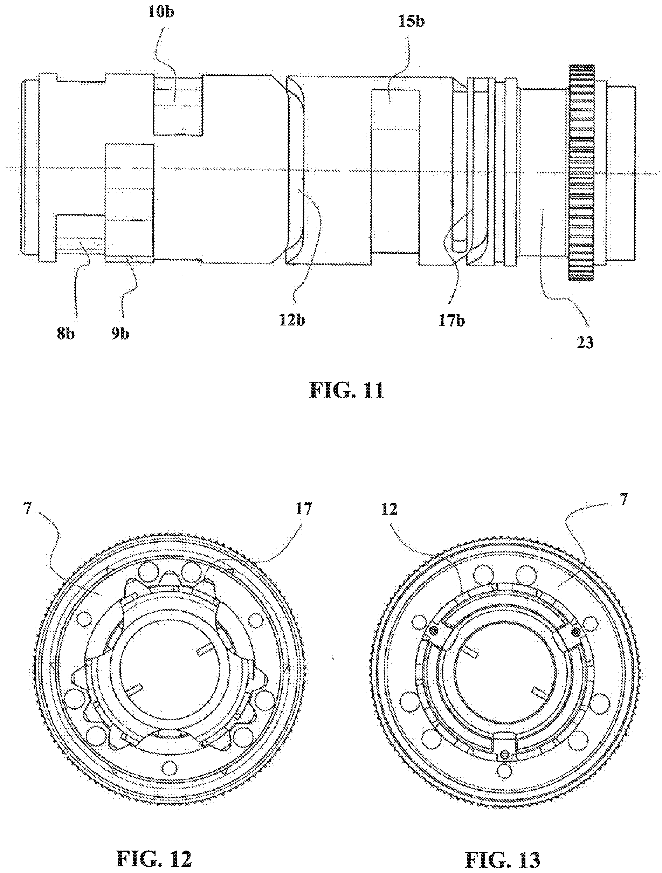

Pour la sélection des rapports de transmission, les cliquets 8a, 9a, 10a et 15a, et éventuellement les dispositifs de crabotage 12 et 17, sont déplacés par des cames constituées par des gorges de commande sur un arbre de commande 23 tubulaire rotatif, mieux visible sur les figures 1 et 11.

Sur la figure 11, on distingue sur l'arbre de commande 23 la gorge 8b pour le déplacement du cliquet 8a, la gorge 9b pour le déplacement du cliquet 9a, la gorge 10b pour le déplacement du cliquet 10a et la gorge 15b pour le déplacement du cliquet 15a, ainsi que la gorge 12b pour le déplacement du premier dispositif de crabotage 12 et la gorge 17b pour le déplacement du second dispositif de crabotage 17.

Comme illustré sur la figure 1, l'arbre de commande 23 est disposé coaxial entre l'arbre d'entrée 2 et le support tubulaire 21, et est monté rotatif dans le support tubulaire 21. L'arbre de commande 23 est couplé en rotation avec un moteur de commande de transmission 30 qui lui-même est rapporté et fixé dans une partie du support tubulaire 21 entourée par les roulements de sortie 22 portant l'arbre de sortie 19.

La rotation de l'arbre de commande 24 provoque le déplacement des cliquets et des dispositifs de crabotage entre les différentes étapes à rapports de transmission différents telles qu'illustrées sur les figures suivantes.

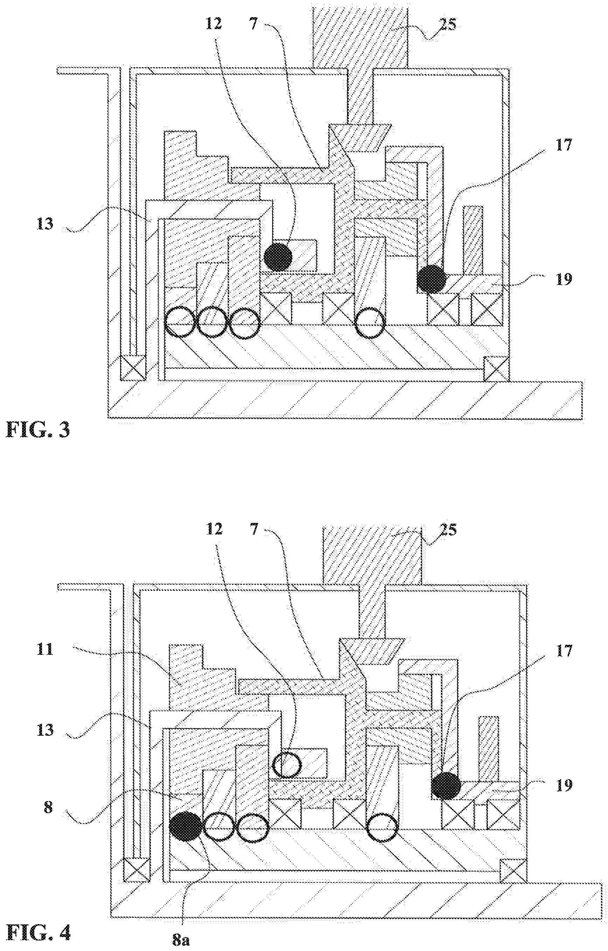

Un premier rapport de transmission est illustré sur la figure 3, sur laquelle les dispositifs de crabotage 12 et 17 sont tous deux engagés, réalisant une liaison solidaire en rotation entre la première entrée 13, l'élément de transmission intermédiaire 7 et l'arbre de sortie 19.

Un second rapport de transmission est illustré sur la figure 4, sur laquelle le premier dispositif de crabotage 12 est dégagé, le premier pignon 8 est bloqué par le cliquet 8a, le second dispositif de crabotage 17 est engagé.

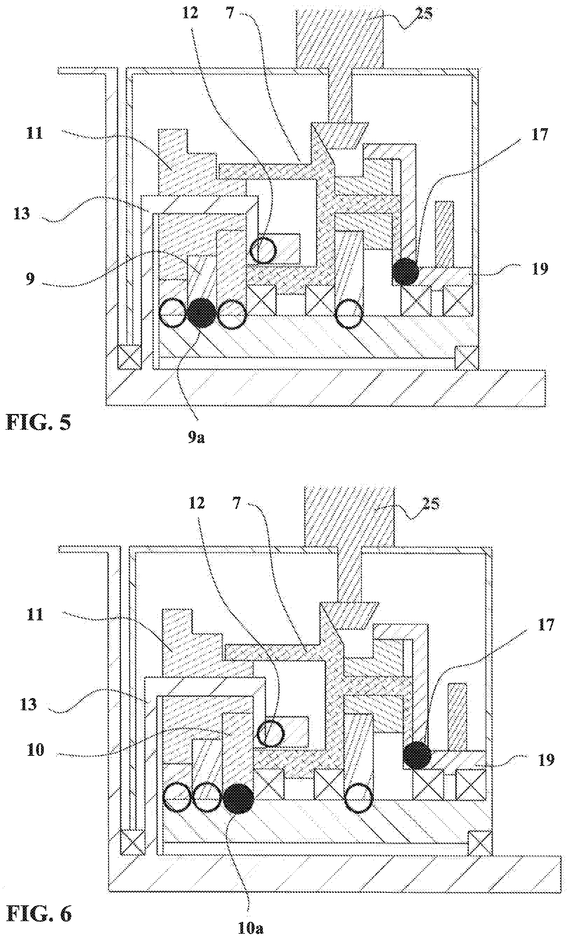

Un troisième rapport de transmission est illustré sur la figure 5, sur laquelle le premier dispositif de crabotage 12 est dégagé, le deuxième pignon 9 est bloqué par le cliquet 9a, le second dispositif de crabotage 17 est engagé.

Un quatrième rapport de transmission est illustré sur la figure 6, sur laquelle le premier dispositif de crabotage 12 est dégagé, le troisième pignon 10 est bloqué par le cliquet 10a, le second dispositif de crabotage 17 est engagé.

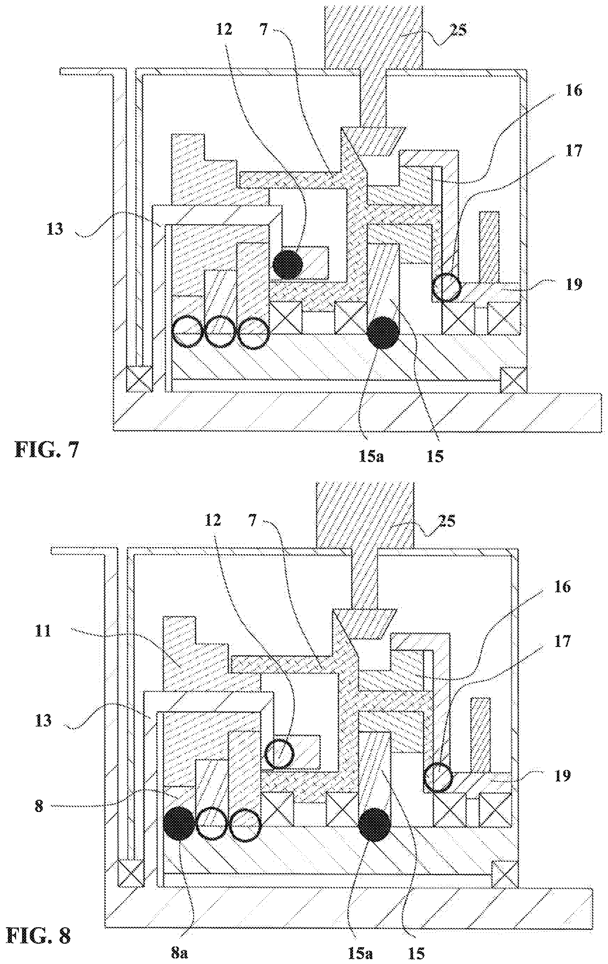

Un cinquième rapport de transmission est illustré sur la figure 7, sur laquelle le premier dispositif de crabotage 12 est engagé, le second dispositif de crabotage 17 est dégagé, et le quatrième pignon 15 est bloqué par le cliquet 15a.

Un sixième rapport de transmission est illustré sur la figure 8, sur laquelle le premier dispositif de crabotage 12 est dégagé, le premier pignon 8 est bloqué par le cliquet 8a, le second dispositif de crabotage 17 est dégagé, et le quatrième pignon 15 est bloqué par le cliquet 15a.

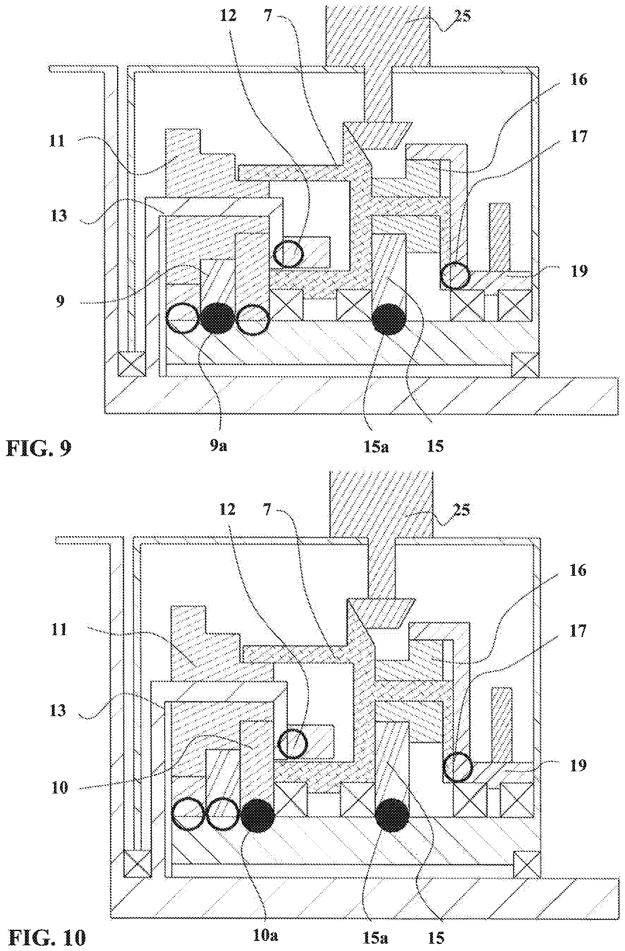

Un septième rapport de transmission est illustré sur la figure 9, sur laquelle le premier dispositif de crabotage 12 est dégagé, le deuxième pignon 9 est bloqué par le cliquet 9a, le second dispositif de crabotage 17 est dégagé, et le quatrième pignon 15 est bloqué par le cliquet 15a.

Enfin, un huitième rapport de transmission est illustré sur la figure 10, sur laquelle le premier dispositif de crabotage 12 est dégagé, le troisième pignon 10 est bloqué par le cliquet 10a, le second dispositif de crabotage 17 est dégagé, et le quatrième pignon 15 est bloqué par le cliquet 15a.

Les figures 12 et 13 illustrent respectivement la structure et l'imbrication du second dispositif de crabotage 17 et du premier dispositif de crabotage 12 dans l'élément de transmission intermédiaire 7.

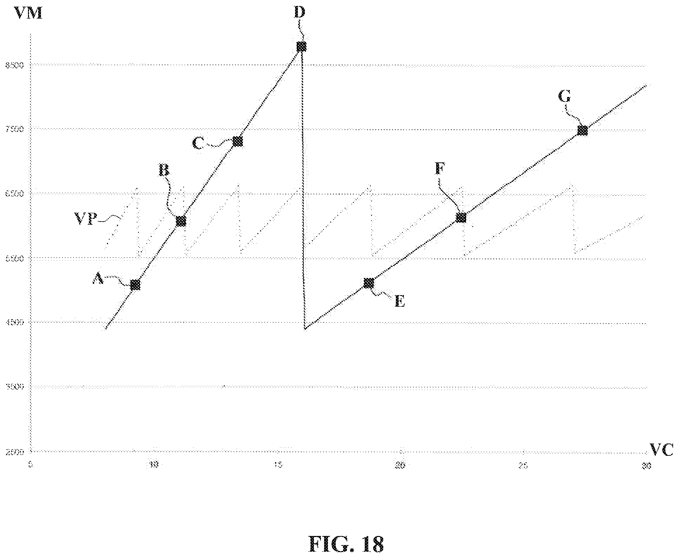

Le changement des rapports de transmission du dispositif est assuré par l'alimentation du moteur de commande de transmission 30 (figure 1). Un circuit électronique de commande 100 pilote l'alimentation dudit moteur de commande de transmission 30. A chaque changement de rapport de transmission du second sous-ensemble de transmission 6, il est avantageux d'adapter le couple d'assistance fourni par le moteur d'assistance électrique 25, afin de faciliter le changement de rapport. Pour cela, le circuit électronique de commande 100 doit également piloter l'alimentation du moteur d'assistance électrique, et doit pour cela comprendre des moyens de synchronisation structurés pour exécuter les séquences de pilotage expliquées ci-après en relation avec la figure 18.

On a repéré, sur cette figure 18, en abscisse la vitesse VC du véhicule, et en ordonnée la vitesse VM du moteur d'assistance électrique 25. Dans le graphique, la courbe en dents de scie en pointillés illustre la forme d'onde de la vitesse de rotation VP du pédalier, étant précisé que seule la forme d'onde est indiquée, la vitesse de rotation n'étant pas en relation avec l'échelle indiquée en ordonnée pour la vitesse VM du moteur d'assistance électrique. La vitesse de rotation VP du pédalier se trouve limitée dans une plage de vitesses acceptable pour l'utilisateur, par exemple autour d'une valeur moyenne d'environ 60 tr/m. La vitesse de rotation VP du pédalier est maintenue dans cette plage acceptable grâce aux différents changements de rapports de transmission qui sont illustrés et repérés par les lettres A, B, C, D, E, F et G. La vitesse de rotation VM du moteur d'assistance électrique 25 suit la ligne en Z qui relie les points de changement de rapports de transmission.

En considérant tout d'abord la figure 18 dans le cas d'une montée progressive de vitesse du véhicule, on part d'une vitesse VC faible, la vitesse VP du pédalier suit une première pente montante jusqu'à un premier sommet correspondant à un premier point A de changement de rapport de transmission, revient brusquement à sa vitesse minimale et suit une seconde pente montante jusqu'à un second sommet correspondant à un second point B de changement de rapport de transmission, revient brusquement à sa vitesse minimale et suit une troisième pente montante jusqu'à un troisième sommet correspondant à un troisième point C de changement de rapport de transmission, et ainsi de suite jusqu'au septième point G de changement de rapport de transmission.

Dans le cas de cette montée progressive de vitesse du véhicule, on maintient avantageusement la puissance du moteur d'assistance électrique 25 lors des changements de rapport de transmission du seul premier sous-ensemble de transmission 5, c'est-à-dire aux points A, B, C, E, F et G. Au point D, on change simultanément les rapports de transmission du premier sous-ensemble de transmission 5 et du second sous-ensemble de transmission 6, et il est alors avantageux d'augmenter brièvement la puissance du moteur d'assistance électrique 25.

Dans le cas d'une réduction progressive de la vitesse VC du véhicule, on suit la même courbe de la figure 18 en sens inverse. Dans ce cas, il est avantageux d'augmenter brièvement la puissance du moteur d'assistance électrique 25 lors des changements de rapport de transmission du seul premier sous-ensemble de transmission 5, c'est-à-dire aux points A, B, C, E, F et G. Au point D, on change simultanément les rapports de transmission du premier sous-ensemble de transmission 5 et du second sous-ensemble de transmission 6, et il est alors avantageux de réduire brièvement la puissance du moteur d'assistance électrique 25.

Le circuit électronique de commande 100 peut par exemple comprendre un microprocesseur ou un microcontrôleur, associé à un programme de synchronisation comportant les séquences de pilotage décrites ci-dessus, et pilotant les alimentations électriques du moteur d'assistance électrique 25 et du moteur de commande de transmission 30 en fonction d'informations telles que : une information de demande de changement de rapport de transmission générée par une interface utilisateur (l'utilisateur donne alors un ordre de changement de rapport de transmission) ou par une électronique de commande du véhicule (qui ordonne un changement automatique de rapport de transmission), une information du rapport de transmission engagé fournie par une mémoire ou par des capteurs associés aux éléments mécaniques du dispositif de transmission.

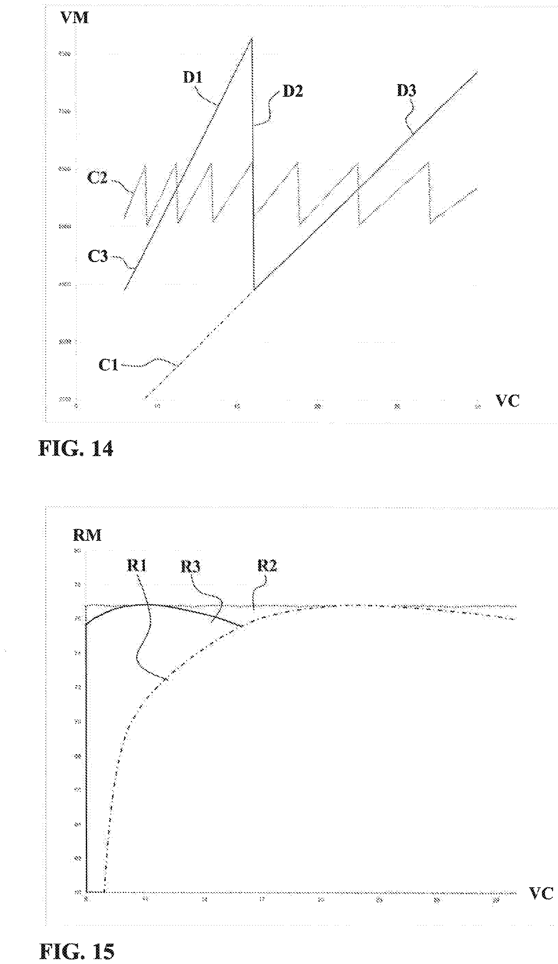

On considère maintenant la figure 14, qui représente la variation de la vitesse VM (en tours par minute) du moteur d'assistance en fonction de la vitesse VC (en kilomètres par heure) du véhicule, dans trois configurations distinctes. La courbe C1 est relative à la première configuration, dans laquelle un moteur d'assistance électrique est couplé directement sur une roue du véhicule. La courbe C2 est relative à la seconde configuration, dans laquelle le moteur d'assistance électrique est couplé directement sur le pédalier. La courbe C3 est relative à la configuration selon la présente invention, dans laquelle le moteur d'assistance électrique 25 est couplé sur un élément de transmission intermédiaire 7 entre un premier sous-ensemble de transmission 5 et un second sous-ensemble de transmission 6.

La courbe C1 est une droite continue sur toute la plage de vitesse du véhicule, puisque le moteur d'assistance électrique a une vitesse VM directement proportionnelle à la vitesse VC du véhicule. Le moteur d'assistance électrique peut fournir une assistance continue, quelle que soit la vitesse VC du véhicule, puisque les changements de rapports de transmission s'effectuent en amont et ne sont pas soumis au couple d'assistance du moteur d'assistance électrique. Mais on comprend que, dans toute la plage où la vitesse VC du véhicule est basse, la vitesse VM du moteur d'assistance électrique est également basse, de sorte que le moteur d'assistance électrique ne fonctionne pas dans de bonnes conditions.

La courbe C2 est une ligne brisée en dents de scie restant au voisinage d'une vitesse moyenne du moteur d'assistance électrique, puisque dans une utilisation normale l'opérateur change de rapport de transmission de façon à conserver une vitesse de pédalage proche d'une vitesse optimale qui lui convient, et puisque la vitesse VM du moteur d'assistance est directement proportionnelle à la vitesse de rotation du pédalier. On comprend que ce fonctionnement nécessite un grand nombre de changements de rapports de transmission perceptibles par le moteur d'assistance électrique, en l'espèce 7 changements pour parcourir toute la plage de vitesse VC du véhicule.

La courbe C3 selon la présente invention est une ligne brisée qui comporte un seul changement de rapport de transmission perceptible par le moteur d'assistance électrique 25. Ainsi, la courbe C3 comporte, depuis une vitesse VC basse du véhicule, une première droite D1 ascendante, puis un saut négatif D2 lors du changement de rapport du second sous-ensemble de transmission 6, puis à nouveau une seconde droite D3 ascendante. Les changements de rapport de transmission du premier sous-ensemble de transmission 5 ne sont pas perçus par le moteur d'assistance électrique 25.

Au cours d'une première plage de vitesse VC du véhicule correspondant à la première droite D1 ascendante, le passage des rapports de transmission du premier sous-ensemble de transmission 5 permet de réaliser, comme sur la courbe C2, une vitesse de pédalage proche de la vitesse optimale qui convient à l'utilisateur. Au cours d'une deuxième plage de vitesse VC du véhicule correspondant à la seconde droite D3 ascendante, après le changement de rapport de transmission du second sous-ensemble de transmission 6 illustré par le saut négatif D2, le passage à nouveau des rapports de transmission du premier sous-ensemble de transmission 5 permet de réaliser, comme sur la courbe C2, une vitesse de pédalage proche de la vitesse optimale qui convient à l'utilisateur.

La comparaison des courbes illustrées sur la figure 14 montre que la première configuration C1 conduit un fonctionnement défectueux du moteur d'assistance électrique pendant la plage basse des vitesses VC du véhicule, et que la seconde configuration C2 conduit à un défaut de confort de l'utilisateur qui perd l'assistance électrique à chaque changement de rapport de transmission, c'est-à-dire au moins 7 fois lors du parcours de toute la plage de vitesse VC du véhicule. Par contre, la configuration C3 selon la présente invention provoque une seule fois la perte d'assistance électrique au changement de rapport de transmission du second sous-ensemble de transmission 6, et la vitesse du moteur d'assistance électrique 25 reste suffisamment élevée, sur toute la plage de vitesse VC du véhicule, pour garantir un fonctionnement correct du moteur d'assistance électrique 25.

L'effet favorable d'un fonctionnement correct du moteur d'assistance électrique 25 est illustré sur la figure 15. On a représenté, dans les trois configurations précédentes, le rendement RM (en pourcent) d'un moteur d'assistance électrique, de type moteur à courant continu sans balais, en fonction de la vitesse VC (en kilomètres par heure) du véhicule, le moteur à courant continu fournissant une puissance constante de l'ordre de 250 W. Ainsi, la courbe R1 illustre le rendement du moteur d'assistance électrique pour la première configuration dans laquelle le moteur d'assistance électrique est couplé directement à une roue du véhicule, la courbe R2 illustre le rendement du moteur d'assistance électrique pour la seconde configuration dans laquelle le moteur d'assistance électrique est couplé directement au pédalier, la courbe R3 illustre le rendement du moteur d'assistance électrique 25 pour la configuration selon la présente invention. On voit que le rendement du moteur d'assistance électrique 25 sur la courbe R3 reste élevé sur toute la plage de vitesse VC du véhicule.

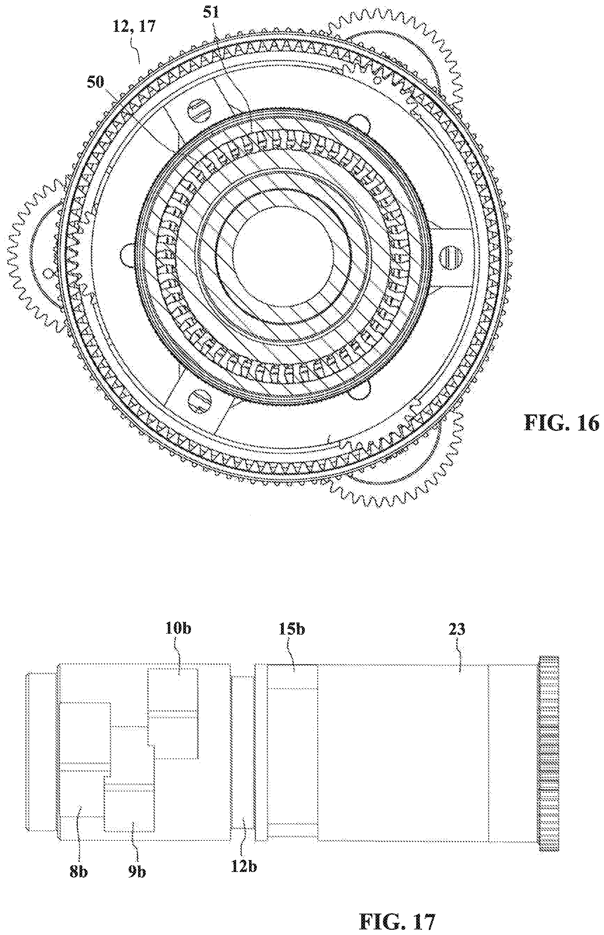

Les figures 16 et 17 illustrent un mode de réalisation selon l'invention dans lequel le premier sous-ensemble de transmission 5 et le second sous-ensemble de transmission 6 comprennent chacun un train épicycloïdal multiplicateur. Dans ce cas, chacun des dispositifs de crabotage 12 et 17 peut être réalisé par un simple dispositif de roue libre tel qu'illustré sur la figure 16. Il s'agit par exemple d'un dispositif de roue libre bien connu dans l'état de la technique, l'effet de roue libre étant procuré par une série de leviers articulés 50 répartis en couronne et venant s'arc-bouter sur une plage cylindrique 51 dans un premier sens de rotation, et échappant à la plage cylindrique 51 dans un deuxième sens de rotation.

Dans le cas de tels dispositifs de crabotage 12 et 17 en roue libre, l'arbre de commande 23 peut-être simplifié comme illustré sur la figure 17 : il n'y a plus besoin, dans ce mode de réalisation, de cames pour l'actionnement des dispositifs de crabotage (les gorges 12b et 17b sur la figure 11).

Les rapports de transmission des sous-ensembles de transmission sont calculés de manière à ce que le passage des rapports de transmission se fasse de manière séquentielle, c'est-à-dire selon une suite monotone à progression régulière. Pour cela, les rapports de transmission du second sous-ensemble de transmission sont calculés sur la base des rapports du premier sous-ensemble de transmission.

A titre d'exemple, on peut considérer un premier sous-ensemble de transmission 5 ayant quatre rapports de transmission, et un second sous-ensemble de transmission 6 ayant deux rapports de transmission. Le premier sous-ensemble de transmission 5 peut par exemple offrir les rapports 1:1, 2:1, 4:1 et 8:1, formant une suite monotone qui augmente la réduction de 200 % à chaque rapport. Le second rapport de transmission du second sous-ensemble de transmission 6 peut avantageusement être choisi égal à 16:1. Cela donne au final la suite des rapports monotone suivante : 1:1, 2:1, 4:1 et 8:1, 16:1, 32:1, 64:1 et 128:1.

## Revendications

1. - Dispositif de transmission (1) pour véhicule à propulsion humaine, comprenant :
- un arbre d'entrée (2) rotatif, apte à recevoir un couple d'entraînement appliqué par un utilisateur,
- un premier sous-ensemble de transmission (5) à plusieurs rapports de transmission, ayant une première entrée (13) couplée à l'arbre d'entrée (2) rotatif, et ayant une première sortie (14),
- un second sous-ensemble de transmission (6) à plusieurs rapports de transmission, ayant une seconde entrée (18), et ayant un arbre de sortie (19) coaxial avec l'arbre d'entrée,
- un élément de transmission intermédiaire (7), couplant fonctionnellement en rotation la première sortie (14) et la seconde entrée (18),
- des moyens de couplage (26) aptes à transmettre à l'élément de transmission intermédiaire (7) un couple d'assistance généré sur l'arbre (24) d'un moteur d'assistance (25),
- le premier sous-ensemble de transmission (5) et le second sous-ensemble de transmission (6) comprennent chacun un train épicycloïdal,
- l'élément de transmission intermédiaire (7) est une pièce, constituant à la fois la première sortie (14) et la seconde entrée (18), et montée rotative et coaxiale avec l'arbre d'entrée (2) et l'arbre de sortie (19), **caractérisé en ce que**
- l'élément de transmission intermédiaire (7) comprend un premier dispositif de crabotage (12) apte à coupler sélectivement la première sortie (14) à la première entrée (13) du premier sous-ensemble de transmission (5),
- l'élément de transmission intermédiaire (7) comprend un second dispositif de crabotage (17) apte à coupler sélectivement l'arbre de sortie (19) à la seconde entrée (18) du second sous-ensemble de transmission (6).

2. - Dispositif de transmission pour véhicule à propulsion humaine selon la revendication 1, **caractérisé en ce que** l'élément de transmission intermédiaire (7) incorpore un des éléments du second sous-ensemble de transmission (6).

3. - Dispositif de transmission pour véhicule à propulsion humaine selon l'une des revendications 1 ou 2, **caractérisé en ce que** l'élément de transmission intermédiaire (7) est disposé en liaison pivot sur un support tubulaire (21) fixe entourant l'arbre d'entrée (2).

4. - Dispositif de transmission pour véhicule à propulsion humaine selon l'une quelconque des revendications 1 à 3, **caractérisé en ce que** :
- le premier sous-ensemble de transmission (5) et le second sous-ensemble de transmission (6) comprennent chacun un train épicycloïdal multiplicateur,
- le premier dispositif de crabotage (12) comprend un dispositif de roue libre couplant sélectivement la première sortie (14) à la première entrée (13) du premier sous-ensemble de transmission (5),
- le second dispositif de crabotage (17) comprend un dispositif de roue libre couplant sélectivement l'arbre de sortie (19) à la seconde entrée (18) du second sous-ensemble de transmission (6).

5. - Dispositif de transmission pour véhicule à propulsion humaine selon l'une quelconque des revendications 1 à 4, **caractérisé en ce qu'**il comprend un circuit électronique de commande (100) pilotant un moteur de commande de transmission (30), entraînant en rotation un unique arbre à cames de commande de transmission (24, 8a, 9a, 10a, 15a) agencé pour modifier sélectivement les rapports de transmission de l'un et l'autre du premier sous-ensemble de transmission (5) et du second sous-ensemble de transmission (6).

6. - Dispositif de transmission pour véhicule à propulsion humaine selon la revendication 5, **caractérisé en ce que** :
- les rapports de transmission successifs du premier sous-ensemble de transmission (5) sont répartis en une suite monotone de rapports, de préférence une suite de rapports à progression régulière,
- les premier et second rapports de transmission du second sous-ensemble de transmission (6) sont choisis de façon que la suite des rapports combinés de transmission réalisés par la combinaison des rapports de transmission du premier sous-ensemble de transmission (5) et du premier rapport de transmission du second sous-ensemble de transmission (6) se poursuive de façon monotone, de préférence de façon régulière, par la suite des rapports combinés de transmission réalisés par la combinaison des rapports de transmission du premier sous-ensemble de transmission (5) et du second sous-ensemble de transmission (6).

7. - Dispositif de transmission pour véhicule à propulsion humaine selon la revendication 6, **caractérisé en ce que** :
- le premier sous-ensemble de transmission (5) est multiplicateur,
- le produit du plus petit ratio de transmission du premier sous-ensemble de transmission (5) avec un des ratios de transmission du second sous-ensemble de transmission (6) est supérieur au produit du plus grand ratio de transmission du premier sous-ensemble de transmission (5) avec le ratio du rapport de transmission précédent du second sous-ensemble de transmission (6).

8. - Dispositif de transmission pour véhicule à propulsion humaine selon l'une quelconque des revendications 5 à 7, **caractérisé en ce qu'**il comprend un moteur d'assistance électrique (25) apte à produire ledit couple d'assistance reçu par l'élément de transmission intermédiaire (7).

9. - Dispositif de transmission pour véhicule à propulsion humaine selon la revendication 8, **caractérisé en ce que** le circuit électronique de commande (100) pilote l'alimentation du moteur d'assistance électrique (25) et du moteur de commande de transmission (30), le circuit électronique de commande (100) comprenant des moyens de synchronisation structurés de telle façon que :
- ils réduisent temporairement le couple d'assistance produit par le moteur d'assistance électrique (25) au cours de chaque étape d'alimentation du moteur de commande de transmission (30) produisant une augmentation du rapport de transmission du second sous-ensemble de transmission (6), et/ou
- ils augmentent temporairement le couple d'assistance produit par le moteur d'assistance électrique (25) au cours de chaque étape d'alimentation du moteur de commande de transmission (30) produisant une diminution du rapport de transmission du second sous-ensemble de transmission (6), et
- ils maintiennent sans changement ou augmentent brièvement le couple d'assistance produit par le moteur d'assistance électrique (25) au cours de chaque étape d'alimentation du moteur de commande de transmission (30) produisant un changement de rapport de transmission du seul premier sous-ensemble de transmission (5).

10. - Cycle muni d'un dispositif de transmission selon l'une quelconque des revendications 1 à 9.

## Patentansprüche

1. Getriebevorrichtung (1) für ein durch Menschenkraft angetriebenes Fahrzeug, umfassend:
- eine rotierende Eingangswelle (2), die in der Lage ist, ein von einem Benutzer aufgebrachtes Antriebsdrehmoment aufzunehmen,
- eine erste Getriebebaugruppe (5) mit mehreren Übersetzungsverhältnissen, aufweisend einen ersten Eingang (13), der mit der rotierenden Eingangswelle (2) gekoppelt ist und einen ersten Ausgang (14),
- eine zweite Getriebebaugruppe (6) mit mehreren Übersetzungsverhältnissen, aufweisend einen zweiten Eingang (18) und aufweisend eine zur Eingangswelle koaxiale Ausgangswelle (19),
- ein Zwischengetriebeelement (7), das den ersten Ausgang (14) und den zweiten Eingang (18) funktionell rotatorisch koppelt,
- Kopplungsmittel (26), die in der Lage sind, ein auf der Welle (24) eines Hilfsmotors (25) erzeugtes Unterstützungsdrehmoment auf das Zwischengetriebeelement (7) zu übertragen,
- die erste Getriebebaugruppe (5) und die zweite Getriebebaugruppe (6) jeweils ein Planetengetriebe umfassen,
- das Zwischengetriebeelement (7) ein Teil ist, das sowohl den ersten Ausgang (14) als auch den zweiten Eingang (18) bildet und rotierbar und koaxial zur Eingangswelle (2) und zur Ausgangswelle (19) montiert ist,
**dadurch gekennzeichnet, dass**
- das Zwischengetriebeelement (7) eine erste Klammervorrichtung (12) umfasst, die in der Lage ist, den ersten Ausgang (14) selektiv mit dem ersten Eingang (13) der ersten Getriebebaugruppe (5) zu koppeln,
- das Zwischengetriebeelement (7) eine zweite Klammervorrichtung (17) umfasst, welche in der Lage ist, die Ausgangswelle (19) selektiv mit dem zweiten Eingang (18) der zweiten Getriebebaugruppe (6) zu koppeln.

2. Getriebevorrichtung für ein durch Menschenkraft angetriebenes Fahrzeug nach Anspruch 1, **dadurch gekennzeichnet, dass** das Zwischengetriebeelement (7) eines der Elemente der zweiten Getriebebaugruppe (6) inkorporiert.

3. Getriebevorrichtung für ein durch Menschenkraft angetriebenes Fahrzeug nach einem der Ansprüche 1 oder 2, **dadurch gekennzeichnet, dass** das Zwischengetriebeelement (7) in pivotierender Verbindung an einem die Eingangswelle (2) umgebenden festen Rohrträger (21) angeordnet ist.

4. Getriebevorrichtung für ein durch Menschenkraft angetriebenes Fahrzeug nach einem der Ansprüche 1 bis 3, **dadurch gekennzeichnet, dass**:
- die erste Getriebebaugruppe (5) und die zweite Getriebebaugruppe (6) jeweils ein multiplizierendes Planetengetriebe umfassen,
- die erste Klammervorrichtung (12) eine Freilaufvorrichtung umfasst, welche den ersten Ausgang (14) selektiv mit dem ersten Eingang (13) der ersten Getriebebaugruppe (5) koppelt,
- die zweite Klammervorrichtung (17) eine Freilaufvorrichtung umfasst, welche die Ausgangswelle (19) selektiv mit dem zweiten Eingang (18) der zweiten Getriebebaugruppe (6) koppelt.

5. Getriebevorrichtung für ein durch Menschenkraft angetriebenes Fahrzeug nach einem der Ansprüche 1 bis 4, **dadurch gekennzeichnet, dass** sie eine elektronische Steuerschaltung (100) umfasst, die einen Getriebesteuermotor (30) steuert, der eine einzelne Nockenwelle der Getriebesteuerung (24, 8a, 9a, 10a, 15a) zur Rotation antreibt, die so angeordnet ist, dass sie die Übersetzungsverhältnisse der ersten Getriebebaugruppe (5) und der zweiten Getriebebaugruppe (6) selektiv modifiziert.

6. Getriebevorrichtung für ein durch Menschenkraft angetriebenes Fahrzeug nach Anspruch 5, **dadurch gekennzeichnet, dass**:
- die aufeinanderfolgenden Übersetzungsverhältnisse der ersten Getriebebaugruppe (5) in eine monotone Folge von Verhältnissen, vorzugsweise in eine Folge von Verhältnissen mit regelmäßiger Progression, verteilt sind,
- die ersten und zweiten Übersetzungsverhältnisse der zweiten Getriebebaugruppe (6) so gewählt sind, dass sich die Folge der kombinierten Übersetzungsverhältnisse, die sich aus der Kombination der Übersetzungsverhältnisse der ersten Getriebebaugruppe (5) und des ersten Übersetzungsverhältnisses der zweiten Getriebebaugruppe (6) ergibt, monoton, vorzugsweise regelmäßig, in der Folge der kombinierten Übersetzungsverhältnisse fortsetzt, die sich aus der Kombination der Übersetzungsverhältnisse der ersten Getriebebaugruppe (5) und der zweiten Getriebebaugruppe (6) ergeben.

7. Getriebevorrichtung für ein durch Menschenkraft angetriebenes Fahrzeug nach Anspruch 6, **dadurch gekennzeichnet, dass**:
- die erste Getriebebaugruppe (5) ein Multiplikator ist,
- das Produkt des kleinsten Übersetzungsverhältnisses der ersten Getriebebaugruppe (5) mit einem der Übersetzungsverhältnisse der zweiten Getriebebaugruppe (6) größer ist als das Produkt des größten Übersetzungsverhältnisses der ersten Getriebebaugruppe (5) mit dem Verhältnis des vorherigen Übersetzungsverhältnisses der zweiten Getriebebaugruppe (6).

8. Getriebevorrichtung für ein durch Menschenkraft angetriebenes Fahrzeug nach einem der Ansprüche 5 bis 7, **dadurch gekennzeichnet, dass** sie einen elektrischen Hilfsmotor (25) umfasst, der in der Lage ist, das vom Zwischengetriebeelement (7) aufgenommene Unterstützungsdrehmoment zu erzeugen.

9. Getriebevorrichtung für ein durch Menschenkraft angetriebenes Fahrzeug nach Anspruch 8, **dadurch gekennzeichnet, dass** die elektronische Steuerschaltung (100) die Stromversorgung des elektrischen Hilfsmotors (25) und des Getriebesteuermotors (30) steuert, wobei die elektronische Steuerschaltung (100) Synchronisationsmittel umfasst, die so aufgebaut sind, dass:
- sie vorübergehend das von dem elektrischen Hilfsmotor (25) erzeugte Unterstützungsmoment während jeder Leistungsstufe des Getriebesteuermotors (30) reduzieren, wodurch sich eine Erhöhung des Übersetzungsverhältnisses der zweiten Getriebebaugruppe (6) ergibt, und/oder
- sie vorübergehend das vom elektrischen Hilfsmotor (25) erzeugte Unterstützungsdrehmoment während jeder Leistungsstufe des Getriebesteuermotors (30) erhöhen, wodurch sich eine Reduzierung des Übersetzungsverhältnisses der zweiten Getriebebaugruppe (6) ergibt, und
- sie das von dem elektrischen Getriebebaugruppe (25) erzeugte Unterstützungsdrehmoment während jeder Leistungsstufe des Getriebesteuermotors (30) unverändert aufrecht halten oder es kurzzeitig erhöhen, wodurch sich eine Änderung des Übersetzungsverhältnisses der einzigen ersten Getriebebaugruppe (5) ergibt.

10. Fahrrad, versehen mit einer Getriebevorrichtung nach einem der Ansprüche 1 bis 9.

## Claims

1. - Transmission device (1) for a human-powered vehicle, comprising:
- a rotary input shaft (2) able to receive a drive torque applied by a user,
- a first transmission subassembly (5) with a plurality of transmission ratios, having a first input (13) coupled to the rotary input shaft (2), and having a first output (14),
- a second transmission subassembly (6) with a plurality of transmission ratios, having a second input (18), and having an output shaft (19) coaxial with the input shaft,
- an intermediate transmission element (7), functionally coupling the first output (14) and the second input (18) in rotation,
- coupling means (26) able to transmit an assistance torque generated on the shaft (24) of an assistance motor (25) to the intermediate transmission element (7),
- the first transmission subassembly (5) and the second transmission subassembly (6) each comprise a planetary gear train,
- the intermediate transmission element (7) is a part constituting both the first output (14) and the second input (18) and mounted rotatably and coaxially with the input shaft (2) and the output shaft (19), **characterized in that**
- the intermediate transmission element (7) comprises a first dog coupling device (12) able to selectively couple the first output (14) to the first input (13) of the first transmission subassembly (5),
- the intermediate transmission element (7) comprises a second dog coupling device (17) able to selectively couple the output shaft (19) to the second input (18) of the second transmission subassembly (6).

2. - Transmission device for a human-powered vehicle according to Claim 1, **characterized in that** the intermediate transmission element (7) incorporates one of the elements of the second transmission subassembly (6) .

3. - Transmission device for a human-powered vehicle according to either of Claims 1 and 2, **characterized in that** the intermediate transmission element (7) is arranged in pivot connection on a fixed tubular support (21) surrounding the input shaft (2).

4. - Transmission device for a human-powered vehicle according to any one of Claims 1 to 3, **characterized in that**:
- the first transmission subassembly (5) and the second transmission subassembly (6) each comprise a multiplying planetary gear train,
- the first dog coupling device (12) comprises a freewheel device selectively coupling the first output (14) to the first input (13) of the first transmission subassembly (5),
- the second dog coupling device (17) comprises a freewheel device selectively coupling the output shaft (19) to the second input (18) of the second transmission subassembly (6).

5. - Transmission device for a human-powered vehicle according to any one of Claims 1 to 4, **characterized in that** it comprises an electronic control circuit (100) controlling a transmission control motor (30), driving in rotation a single transmission control camshaft (24, 8a, 9a, 10a, 15a) designed to selectively modify the transmission ratios of one and the other of the first transmission subassembly (5) and of the second transmission subassembly (6).

6. - Transmission device for a human-powered vehicle according to Claim 5, **characterized in that**:
- the successive transmission ratios of the first transmission subassembly (5) are distributed in a monotonic sequence of ratios, preferably a sequence of ratios with regular progression,
- the first and second transmission ratios of the second transmission subassembly (6) are chosen in such a way that the sequence of the combined transmission ratios produced by the combination of the transmission ratios of the first transmission subassembly (5) and of the first transmission ratio of the second transmission subassembly (6) continues monotonically, preferably regularly, with the sequence of the combined transmission ratios produced by the combination of the transmission ratios of the first transmission subassembly (5) and of the second transmission subassembly (6).

7. - Transmission device for a human-powered vehicle according to Claim 6, **characterized in that**:
- the first transmission subassembly (5) is a multiplying subassembly,
- the product of the smallest transmission ratio of the first transmission subassembly (5) with one of the transmission ratios of the second transmission subassembly (6) is greater than the product of the largest transmission ratio of the first transmission subassembly (5) with the preceding transmission ratio of the second transmission subassembly (6).

8. - Transmission device for a human-powered vehicle according to any one of Claims 5 to 7, **characterized in that** it comprises an electrical assistance motor (25) able to produce said assistance torque received by the intermediate transmission element (7).

9. - Transmission device for a human-powered vehicle according to Claim 8, **characterized in that** the electronic control circuit (100) controls the supply of power to the electrical assistance motor (25) and to the transmission control motor (30), the electronic control circuit (100) comprising synchronizing means structured in such a way that:
- they temporarily reduce the assistance torque produced by the electrical assistance motor (25) during each step of supplying power to the transmission control motor (30) producing an increase in the transmission ratio of the second transmission subassembly (6), and/or
- they temporarily increase the assistance torque produced by the electrical assistance motor (25) during each step of supplying power to the transmission control motor (30) producing a reduction in the transmission ratio of the second transmission subassembly (6), and
- they maintain without change or briefly increase the assistance torque produced by the electrical assistance motor (25) during each step of supplying power to the transmission control motor (30) producing a change of transmission ratio of the first transmission subassembly (5) alone.

10. - Cycle provided with a transmission device according to any one of Claims 1 to 9.
